# EUROPÄISCHE PATENTSCHRIFT

(11) **EP 1 369 702 B1**
(45) Veröffentlichungstag und Bekanntmachung des Hinweises auf die Patenterteilung: **18.02.2009**
(21) Anmeldenummer: 03001988.9
(22) Anmeldetag: 31.01.2003
(51) Int. Cl.: G01S 7/40

(54) **Treibervorrichtung für einen Mikrowellenoszillator**
Driver circuit for a microwave oscillator
Circuit de commande pour un oscillateur à micro-ondes

(30) Priorität: 06.06.2002 DE 10225152
(43) Veröffentlichungstag der Anmeldung: 10.12.2003
(73) Patentinhaber: ROBERT BOSCH GMBH, 70442 Stuttgart (DE)
(72) Erfinder: Winter, Klaus, 71701 Schwieberdingen (DE); Mayer, Hermann, 71665 Vaihingen (DE); Himmelstoss, Armin, 71554 Weissach Im Tal (DE); Hilsebecher, Joerg, 70839 Gerlingen (DE); Hauk, Joachim, 71272 Renningen-Malmsheim (DE)

(56) Entgegenhaltungen:
- EP-A- 0 825 455
- DE-A- 4 242 700
- DE-A- 10 135 290
- US-A1- 2001 035 839

## Beschreibung

Die Erfindung betrifft eine Treibervorrichtung für einen Mikrowellenoszillator in einem Radarsystem für Kraftfahrzeuge, mit einem Regler zur Regelung der Frequenz des Mikrowellenoszillators und einer integrierten Überwachungseinrichtung zur Ausgabe mindestens eines Prüfsignals zur Funktionsprüfung mindestens eines Teilsystems der Treibervorrichtung.

### Stand der Technik

Eine Treibervorrichtung dieser Art ist aus DE 101 35 290 A1 bekannt.

In Kraftfahrzeugen werden zunehmend Radarsysteme eingesetzt, damit eine Ortung vorausfahrender Fahrzeuge und sonstiger Hindernisse und, darauf aufbauend, eine Abstands- und Geschwindigkeitsregelung (ACC, Adaptive Cruise Control) durchgeführt werden kann. Der Mikrowellenoszillator, beispielsweise eine Gunn-Diode, wird durch die Treibervorrichtung angesteuert und erzeugt die Radarwellen, die dann über eine Antenne des Radarsystems abgestrahlt werden. Für die Messgenauigkeit, Trennschärfe und-Empfindlichkeit des Radarsystems ist es von entscheidender Bedeutung, dass die Frequenz des Mikrowellenoszillators mit Hilfe der Treibervorrichtung präzise geregelt und gegebenenfalls moduliert wird. Beispielsweise ist bei einem FMCW-Radar (Frequency Modulated Continious Wave) die Frequenz rampenförmig oder treppenförmig moduliert.

Für die Frequenzregelung wird das vom Mikrowellenoszillator erzeugte Signal mit einem Vergleichssignal gemischt, dessen Frequenz in der gleichen. Grössenordnung liegt wie die Mikrowellenfrequenz. Auf diese Weise erhält man ein Zwischenfrequenzsignal, dessen Frequenz der Differenz zwischen der Frequenz des Vergleichssignals und der Frequenz des Mikrowellenoszillators entspricht.

Bei einer Gunn-Diode oder, allgemeiner, bei einem spannungsgesteuerten Oszillator wird die Frequenz durch die Treiberspannung bestimmt, die dem Oszillator von der Treibervorrichtung zugeführt wird. Der Regler erhält einerseits ein Führungssignal, das die. Sollfrequenz des Mikrowellenoszillators bestimmt, und andererseits das Zwischenfrequenzsignal, dessen Frequenz die Istfrequenz des Oszillators angibt. Bei bisher in der Praxis eingesetzten Radarsystemen für Kraftfahrzeuge ist der Regler in der Treibervorrichtung zumeist als frequenzstarre Schleife ausgebildet, d. h., die Frequenz des zwischenfrequenzsignals wird gemessen und mit dem durch das Führungssignal repräsentierten Sollwert verglichen. Eine Frequenzmodulation des Mikrowellenoszillators kann dann dadurch erreicht werden, dass das Führungssignal variiert wird.

Grundsätzlich kann zur Frequenzregelung jedoch auch eine phasenstarre Schleife (PLL; Phase Locked Loop) eingesetzt werden. In diesem Fall ist die Sollfrequenz durch die Frequenz des Führungssignals gegeben, und im Regler werden die Phasen des Zwischenfrequenzsignals und des Führungssignals miteinander verglichen. Zur Frequenzmodulation wird dann die Frequenz des führungssignal geeignet moduliert.

Bei einem Einsatz in Kraftfahrzeugen ist die Treibervorrichtung verhältnismässig rauhen Bedingungen ausgesetzt, beispielsweise beträchtlichen Schwankungen der Temperatur und der Luftfeuchtigkeit, mechanischen Erschütterungen und dergleichen. Mit zunehmendem Einsatz von elektronischen Komponenten in Kraftfahrzeugen steigt zudem die Gefahr, dass die Funktion empfindlicher Schaltungen der Treibervorrichtung durch elektromagnetische Störsignale beeinträchtigt wird. Funktionsstörungen der Treibervorrichtung können zu Fehlern oder Ungenauigkeiten bei der Frequenzregelung und Frequenzmodulation und damit letztlich zu Fehlern bei der Radarortung führen, durch die die Verkehrssicherheit beeinträchtigt werden kann.

Aus der US 6373427 ist eine Radar-Entfernungsmesseinrichtung bekannt, bei welcher ein insbesondere linear frequenzmoduliertes Hochfrequenzsignal über eine Antenne ausgesendet und außerdem mit von einem in seiner Entfernung zu bestimmenden Zielobjekt reflektierten Echosignalen gemischt wird, um sodann durch Frequenzanalyse des Mischungsergebnisses die Zielobjektentfernung zu errechnen. Eine Verbesserung der Entfernungsauflösung bzw. eine Erhöhung der Messgenauigkeit wird erreicht, indem durch eine erste Frequenzanalyse ein Grob-Analyseergebnis erzeugt wird, das zur Steuerung einer Filtereinrichtung dient, die im Zeitbereich das Mischergebnis auf einen Abschnitt um die Zielobjektfrequenz begrenzt, über welchen eine diskrete Fourier-Transformation zur Erzeugung eines Analyseergebnisses mit einem verfeinerten Abtastschritt gegenüber der ersten Frequenzanalyse durchgeführt wird. Eine weitere Verfeinerung des Messergebnisses wird erreicht, indem nicht nur die zielobjektbedingte Frequenz des Mischungsergebnisses, sondern auch die Phasenlage der Schwingung dieser Frequenz berücksichtigt und das Messergebnis um einen entsprechenden Wellenlängenbruchteil ergänzt wird.

Aus der US 5942948 ist eine Schaltung zur Einrasterkennung einer Regelschleife bekannt, die eine Setzschaltung, eine Zurücksetzschaltung und eine Verriegelungsschaltung aufweist. Die Verriegelungsschaltung erzeugt ein Ausgangssignal in Abhängigkeit des zeitlichen Verhältnisses des ersten Ausgangssignals und des zweiten Ausgangssignals. Die Setzschaltung veranlasst den Übergang der Verriegelungsschaltung in den eingerasteten Zustand, während die Zurücksetzschaltung den Übergang der Verriegelungsschaltung in den unverriegelten Zustand veranlasst.

Aus der US 6218875 ist eine Schaltung zur Steuerung der Reaktionszeit einer PLL-Schaltung bekannt, bei der ein Reaktionszeitschalter und eine Umschaltsteuerung vorgesehne sind, wobei die Umschaltsteuerung mit einem Phasenkomparator der PLL-Schaltung verbunden ist um Ausgangsignale des Phasenkomparators zu erhalten und den Reaktionszeitschalter zu schalten.

Aus der DE 199 63 755 ist eine Abstandssensorvorrichtung bekannt, die insbesondere als Bestandteil einer Einparkhilfe oder Rückfahrhilfe für ein Kraftfahrzeug, mit einem oder mehreren Abstandssensoren und einer Abstandssensor-Steuereinrichtung zum Ansteuern des oder der Abstandssensoren über eine jeweilige Signalleitung mittels eines vorzugsweise quasidigitalen zeitanalogen Ansteuerimpulses, ausgebildet ist. Mindestens einer der Abstandssensoren weist zwei verschiedene Arbeitsmodi auf. Durch eine Variation der Zeitdauer und/oder Amplitude des Ansteuerimpulses von der Abstandssensor-Steuereinrichtung ist eine Umschaltung zwischen den Arbeitsmodi durchführbar.

### Aufgabe, Lösung und Vorteile der Erfindung

Aufgabe der Erfindung ist es, eine Treibervorrichtung der Eingangs genannten Art zu schaffen, bei der sich Funktionsstörungen leicht und schnell erkennens lassen.

Diese Aufgabe wird erfindungsgemäss dadurch gelöst, dass die Überwachungseinrichtung mindestens ein Prüfsignal zur Funktionsprüfung des Reglers erzeugt, dass der Regler einen Phasendetektor zum Vergleich der Phase eines Führungssignals mit der Phase eines die Frequenz des Mikrowellenoszillators repräsentierenden Rückkopplungssignals aufweist und dass das Prüfsignal oder eines der Prüfsignale der Überwachungseinrichtung eine Phasenabweichung zwischen dem Führungssignal und dem Rückkopplungssignal angibt.

Durch Auswertung des Prüfsignals oder der Prüfsignale wird eine einfache und schnelle Erkennung von Fehlfunktionen der Treibervorrichtung ermöglicht. Dies erleichtert nicht nur die Diagnose bei Wartungs- und Reparaturarbeiten, sondern eröffnet insbesondere auch die Möglichkeit zu einer fortlaufenden Funktionsprüfung während des Einsatzes des Radarsystems. Funktionsstörungen, die zu einer Beeinträchtigung der Verkehrssicherheit führen könnten, lassen sich so unverzüglich erkennen, so dass geeignete Gegenmassnahmen getroffen werden können. Sofern sich die Störung nicht unmittelbar automatisch beheben lässt, etwa durch Neuprogrammierung oder einen Reset der Treibervorrichtung, kann bei sicherheitsrelevanten Störungen auch eine automatische Abschaltung des Radarsystems und der darauf aufbauenden Regelsysteme und/oder die Ausgabe eines optischen oder akustischen Fehlersignals an den Fahrer veranlasst werden.

Da die Überwachungseinrichtung unmittelbar in die Treibervorrichtung integriert ist, erübrigt sich ausserdem bei Wartungs- und Reparaturarbeiten der umständliche Anschluss externer Überwachungseinrichtungen. Auf diese Weise wird insbesondere auch ein Aufbau der Treibervorrichtung mit höherer Integrationsdichte ermöglicht, beispielsweise in der Form eines einzigen integrierten Halbleiterelements, ohne dass die Möglichkeit der Funktionsprüfung verloren geht.

Die Überwachungseinrichtung ist zumindest unter anderem für die Funktionsprüfung des Reglers ausgebildet. So können etwa ausserhalb der Toleranzgrenzen liegende Soll/Ist-Abweichungen detektiert werden. Dabei wird der zumeist ohnehin vorhandene Phasendetektor dazu benutzt, die detektierten Phasendifferenzen als Prüfsignal auszugeben oder intern in der integrierten Überwachungseinrichtung im Hinblick auf eine Fehlererkennung auszuwerten.

Vorteilhafte Ausgestaltungen ergeben sich aus den Unteransprüchen.

Sofern in der Treibervorrichtung eine Frequenzmodulation stattfindet, ist die Überwachungseinrichtung bevorzugt auch dazu ausgebildet, das Führiangssignal zu überwachen und/oder andere Funktionen des Modulationssystems zu überprüfen. Zweckmässigerweise enthält die Überwachungseinrichtung dann auch einen Speicher, in dem die relevanten Modulationsparameter abrufbar gespeichert sind.

Ein Statusregister kann dazu verwendet werden, den jeweils aktuellen Zustand der Treibervorrichtung festzustellen, beispielsweise Betriebszustände wie "Modulation", "Pause", "Fehler", etc. Anhand des auf diese Weise festgestellten Systemzustands ist es auch möglich, einzelne Überwachungsfunktionen selektiv zu aktivieren oder zu deaktivieren. Beispielsweise ist es denkbar, daß bestimmte Funktionen des Reglers nur oder besser geprüft werden können, wenn sich das System im Zustand "Pause" befindet, also wenn keine Fequenzmodulation stattfindet. Umgekehrt wird eine Funktionsprüfung des Modulationssystems sinnvollerweise nur dann ausgeführt werden, wenn dieses System aktiv ist.

Weiterhin kann die Treibervorrichtung auch einen oder mehrere Eingänge aufweisen, die es ermöglichen, einzelne Überwachungsfunktionen durch externe Befehle ein- oder auszuschalten.

Die Überwachungseinrichtung kann auch so ausgebildet sein, daß sie eine Vorauswertung vornimmt und lediglich das Ergebnis dieser Vorauswertung ausgibt. Beispielsweise wird dann ein Prüfsignal oder Fehlersignal nur dann ausgegeben, wenn eine überprüfte Soll/Ist-Abweichung außerhalb vorgegebener Toleranzgrenzen liegt oder wenn sich solche Ereignisse signifikant häufen. Ebenso ist es möglich, daß Einzelheiten der Fehlerereignisse, etwa der Zeitpunkt des Auftretens, der Systemzustand bei Auftreten des Fehlers und, soweit erkennbar, die Ursache des Fehlers, intern gespeichert und dann zu gegebener Zeit in der Form eines Fehlerprotokolls ausgelesen werden.

Andererseits ist es auch möglich, daß einzelne Signale, die an verschiedenen Stellen in der Treibervorrichtung auftreten, ohne weitere Aufbereitung als Testsignale nach außen geführt werden, so daß sie mit geeigneten Diagnosegeräten überprüft werden können. Beispiele für solche Testsignale wären etwa die heruntergeteilte Frequenz des Oszillators (Zwischenfrequenz), das Führungssignal oder die Spannung am Ausgang des Reglers. Um die Anzahl der benötigten Ausgänge in Grenzen zu halten, können in die Treibervorrichtung Wählschalter integriert sein, mit denen sich einzelne Testsignale durch externe Befehle oder abhängig vom Systemzustand auswählen und auf einen gemeinsamen Ausgang schalten lassen.

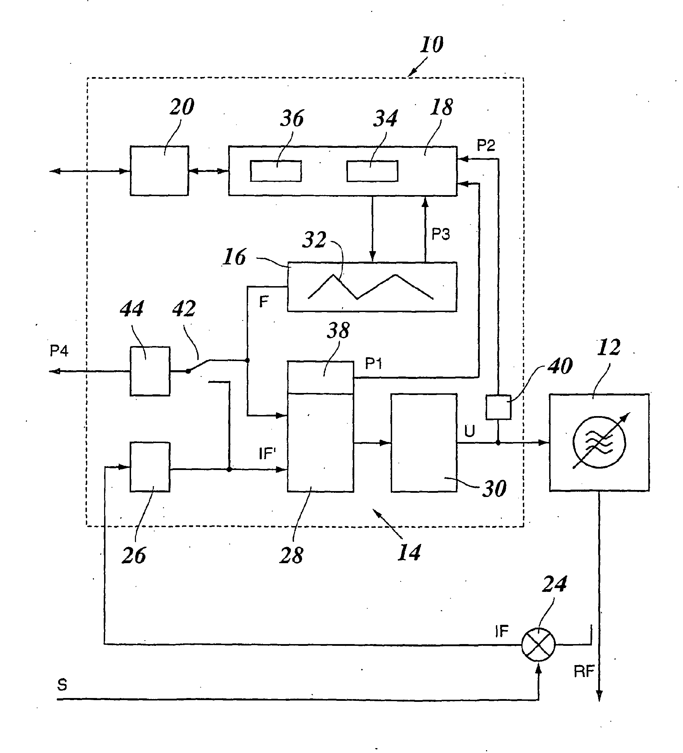

### Kurzbeschreibung der Zeichnung

Die einzige Zeichnungsfigur zeigt ein Blockdiagramm einer erfindungsgemäßen Treibervorrichtung für einen Mikrowellenoszillator.

### Beschreibung eines Ausführungsbeispiels

In dem in der Zeichnung dargestellten Beispiel ist eine Treibervorrichtung 10 für einen Mikrowellenoszillator 12, beispielsweise eine Gunn-Diode, als integrierter Halbleiterbaustein ausgebildet. Die Treibervorrichtung umfaßt einen Regler 14, der eine Treiberspannung U für den Mikrowellenoszillator 12 liefert, einen Modulator 16, beispielsweise einen Frequenzsynthesizer mit Autoweep-Funktion, der ein frequenzmoduliertes Führungssignal F zur Frequenzmodulation des Oszillators erzeugt, und einen Controller 18, der die Funktionen der übrigen Komponenten der Treibervorrichtung steuert und über eine bidirektionale Schnittstelle 20, beispielsweise eine parallele Schnittstelle, eine SPI-Schnittstelle, eine I2C-Schnittstelle oder dergleichen mit der Außenwelt kommuniziert.

Der Mikrowellenoszillator 12 erzeugt ein von der Treiberspannung U abhängiges Ausgangssignal RF, das an die Antenne des Radarsystems angelegt wird. Durch einen Mischer 24 wird das vom Ausgang des Oszillators abgegriffene Ausgangssignal RF mit einem Vergleichssignal S mit fester Frequenz gemischt, das von einem externen Oszillator zugeführt wird. Der Mischer erzeugt so ein Zwischenfrequenzsignal IF, dessen Frequenz der Frequenzdifferenz zwischen den Signalen RF und S entspricht und das zur Frequenzregelung an die Treibervorrichtung 10 zurückgemeldet wird.

In der Treibervorrichtung 10 wird das Zwischenfrequenzsignal durch einen Frequenzteiler 26 nochmals in der Frequenz herabgesetzt und dann als Rückkopplungssignal IF' einem Phasendetektor 28 zugeführt, der die Hauptkomponente des Reglers 14 bildet. Der Phasendetektor 28 vergleicht die Phase des Rückkopplungssignals mit der Phase des Führungssignals F und liefert ein vom Vergleichsergebnis abhängiges Ausgangssignal an eine Verstärker- und Filterschaltung 30, in der durch Verstärkung und Glättung dieses Signals die Treiberspannung U gebildet wird. Auf diese Weise wird die Frequenz des Mikrowellenoszillators 12 in einer phasenstarren Schleife auf einen Sollwert geregelt, der durch die Frequenz des Führungssignals F bestimmt ist.

Die Frequenz des vom Modulator 16 erzeugten Führungssignals F ist gemäß einer Rampenfunktion 32 moduliert, wie symbolisch in der Zeichnung dargestellt ist. Wie es bei einem FMCW-Radar häufig der Fall ist, hat die Rampenfunktion 32 zwei Paare steigender und fallender Rampen, deren Steigungen innerhalb jedes Paares entgegengesetzt gleich, jedoch von Paar zu Paar verschieden sind. Die Modulationsparameter der Rampenfunktion 32, insbesondere die Rampensteigungen, die Rampendauern und die Basisfrequenz, sind in einem Parameterspeicher 34 des Controllers 18 gespeichert und können über die Schnittstelle 20 programmiert und bei Bedarf zu Kontrollzwecken wieder ausgelesen werden.

Der Controller 18 enthält weiterhin ein Statusregister 36, das den jeweils aktuellen Status der Treibervorrichtung 10 angibt, also beispielsweise den Status "Modulation", wenn der Modulator 16 aktiv ist, den Status "Pause", wenn nur der Regler 14 und der Mikrowellenoszillator 12 aber nicht der Modulator 16 aktiv ist, oder den Status "Fehler", wenn der Controller 18 einen Fehler erkannt und gegebenenfalls den Mikrowellenoszillator 12 abgeschaltet hat. Auch diese Statusinformation kann über die Schnittstelle 20 ausgelesen werden.

Der Parameterspeicher 34 und das Statusregister 36 ermöglichen so über die Schnittstelle 20 eine begrenzte Fehlerüberwachung und Fehlerdiagnose und können daher als Komponenten einer Überwachungseinrichtung angesehen werden. Darüber hinaus enthält die Überwachungseinrichtung der Treibervorrichtung 10 verschiedene zusätzliche Überwachungskomponenten, die eine verfeinerte Überwachung und Diagnose und gegebenenfalls auch eine Selbstüberwachung der Treibervorrichtung ermöglichen.

Zu diesen Überwachungskomponenten gehört insbesondere ein dem Phasendetektor 28 zugeordneter Phasenwächter 38. Dieser Phasenwächter 38 meldet ein Prüfsignal P1, das die vom Phasendetektor 28 festgestellten Phasenabweichungen angibt, an den Controller 18. Da etwaige Fehlfunktionen des Reglers 14 unmittelbar zu einer signifikanten Phasendifferenz zwischen dem Führungssignal F und dem Rückkopplungssignal IF' führen, ermöglicht der Phasenwächter 28 eine empfindliche Funktionsprüfung des Reglers. Wahlweise kann der Phasenwächter 38 so gestaltet sein, daß er nur dann das Prüfsignal P1 ausgibt, wenn die Phasendifferenz außerhalb des normalen Regelspiels liegt. Im Controller 18 wird das Prüfsignal P1 weiter ausgewertet, z. B. in der Weise, daß bei extremer oder länger anhaltender Soll/Ist-Abweichung eine Selbstabschaltung erfolgt und im Statusregister 36 der Status "Fehler" angezeigt wird.

Als ergänzende Überwachungskomponente enthält die Treibervorrichtung 10 im gezeigten Beispiel einen Analog/Digital-Umsetzer 40, der die am Reglerausgang anliegende Treiberspannung U digitalisiert und ein entsprechendes Prüfsignal P2 an den Controller 18 meldet.

Auch der Modulator 16 hat im gezeigten Beispiel eine integrierte Überwachungsfunktion und liefert ein weiteres Prüfsignal P3 an den Controller.

Die Prüfsignale P1, P2 und P3 können wahlweise in Echtzeit über die Schnittstelle 20 ausgelesen oder zusammen mit den Zeitpunkten ihres Auftretens im Controller gespeichert und dann zu einem späteren Zeitpunkt ausgelesen werden.

Zu der integrierten Überwachungseinrichtung der Treibervorrichtung 10 gehört weiterhin ein vom Controller 18 gesteuerter Schalter 42 in Verbindung mit einem Frequenzteiler 44. Der Schalter 42 kann durch den Controller 18 automatisch, in Abhängigkeit vom Status, oder wahlweise auch durch einen über die Schnittstelle 20 eingegebenen Befehl zwischen dem Führungssignal F und dem Rückkopplungssignal IF' am Ausgang des Frequenzteilers 26 umgeschaltet werden. Das betreffende Signal wird dann im Frequenzteiler 44 nochmals heruntergeteilt und als Prüfsignal P4 direkt ausgegeben, so daß es in externen Auswerteeinrichtungen (nicht gezeigt) als Testsignal verwendet werden kann. Hierdurch wird die Möglichkeit geschaffen, durch detaillierte Auswertung des Signalverlaufes des Testsignals eine noch weitergehendere Fehlerdiagnose entweder am Modulator 16 oder am Regler 14 vorzunehmen.

Als ergänzende Überwachungsmaßnahme wäre es denkbar, eine Pegelüberwachung an dem Zwischenfrequenzsignal IF oder am Rückkopplungssignal IF' vorzunehmen, damit auch Fehler im Mischer 24 oder im Frequenzteiler 26 erkannt werden können.

## Patentansprüche

1. Treibervorrichtung für einen Mikrowellenoszillator (12) in einem Radarsystem für Kraftfahrzeuge, mit einem Regler (14) zur Regelung der Frequenz des Mikrowellenoszillators und einer integrierten Überwachungseinrichtung (38, 40, 42, 44) zur Ausgabe mindestens eines Prüfsignals (P1, P2, P3, P4) zur Funktionsprüfung mindestens eines Teilsystems der Treibervorrichtung, **dadurch gekennzeichnet, dass** die Überwachungseinrichtung mindestens ein Prüfsignal (P1, P2, P3, P4) zur Funktionsprüfung des Reglers (14) erzeugt, dass der Regler (14) einen Phasendetektor (28) zum Vergleich der Phase eines Führungssignals (F) mit der Phase eines die Frequenz des Mikrowellenoszillators repräsentierenden Rückkopplungssignals (IF') aufweist und dass ein erstes Prüfsignal (P1) der Überwachungseinrichtung eine Phasenabweichung zwischen dem Führungssignal (F) und dem Rückkopplungssignal (lF') angibt und durch mindestens einen, ein zweites Prüfsignal (P4) ausgebenden Ausgang der Treibervorrichtung, über den mindestens eines der während des Betriebs in der Treibervorrichtung (10) auftretenden Signale (F, IF') als zweites Prüfsignal (P4) ausgegeben wird, wobei ein Schalter (42) vorgesehen ist, durch den mehrere Signale (F, IF') auf den besagten Ausgang der Treibervorrichtung schaltbar sind, und das über den besagten Ausgang der Treibervorrichtung ausgebbare zweite Prüfsignal (P4) ein frequenzmoduliertes Führungssignal (F) oder ein die Frequenz des Mikrowellenoszillators (12) repräsentierendes Rückkopplungssignal (lF') ist, wobei diese selektiv auf den besagten Ausgang der Treibervorrichtung schaltbar sind.

2. Treibervorrichtung nach Anspruch 1, **dadurch gekennzeichnet, dass** der Mikrowellenoszillator (12) ein sparinungsgesteuerter Oszillator ist und dass ein drittes Prüfsignal (P2) der Überwachungseinrichtung die vom Regler (14) erzeugte Treiberspannung (U) für den Mikrowellenoszillator angibt.

3. Treibervorrichtung nach einem der vorstehenden Ansprüche, **dadurch gekennzeichnet, dass** sie einen Modulator (16) zur Frequenzmodulation des Ausgangssignals (RF) des Mikrowellenoszillators (12) aufweist

4. Treibervorrichtung nach Anspruch 3, **gekennzeichnet durch** einen Parameterspeicher (34) zur Speicherung von Modulationsparametern für den Modulator (16) und **durch** eine Schnittstelle (20) an einem weiteren Ausgang der Treibervorrichtung, über die der Inhalt des Parameterspeichers (34) auslesbar ist.

5. Treibervorrichtung nach einem der vorstehenden Ansprüche, **dadurch gekennzeichnet, dass** sie ein Statusregister (36) aufweist, das den jeweiligen Betriebszustand der Treibervorrichtung (10) angibt, und dass der Inhalt des Statusregisters (36) über eine Schnittstelle (20) an einem weiteren Ausgang der Treibervorrichtung, auslesbar ist.

6. Treibervorrichtung nach einem der vorstehenden Ansprüche, **gekennzeichnet durch** einen über eine bidirektionale Schnittstelle (20) ansprechbaren Controller (18), der mindestens ein weiteres der Prüfsignale (P1, P2, P3) auswertet und/oder speichert, wobei die bidirektionale Schnittstelle (20) mit einem weiteren Ausgang der Treibervorrichtung verbunden ist.

7. Treibervorrichtung nach Anspruch 1, **dadurch gekennzeichnet, dass** sie einen integrierten Frequenzteiler (44) zum Herabsetzen der Frequenz des über den besagten Ausgang der Treibervorrichtung ausgegebenen Signals aufweist

8. Treibervorrichtung nach einem der vorstehenden Ansprüche, **dadurch gekennzeichnet, dass** sie als integriertes Halbleiterbauelement ausgebildet ist.

## Claims

1. Driver device for a microwave oscillator (12) in a radar system for motor vehicles, having a controller (14) for controlling the frequency of the microwave oscillator, and an integrated monitoring device (38, 40, 42, 44) for outputting at least one check signal (P1, P2, P3, P4) for functionally testing at least one subsystem of the driver device, **characterized in that** t.he monitoring device generates at least one check signal (P1, P2, P3, P4) for functionally testing the controller (14), **in that** the controller (14) has a phase detector (28) for comparing the phase of a reference signal (F) with the phase of a feedback signal (IF') which represents the frequency of the microwave oscillator, and **in that** a first check signal (P1) of the monitoring device specifies a phase error between the reference signal (F) and the feedback signal (IF') and is output by means of at least one output, which outputs a second check signal (P4), of the driver device, via which output at least one of the signals (F, IF') which occurs during the operation in the driver device (10) is output as a second check signal (P4), wherein a switch (42) is provided by means of which a plurality of signals (F, IF') can be connected to said output of the driver device, and the second check signal (P4) which can be output via said output of the driver device is a frequency-modulated reference signal (F) or a feedback signal (IF') which represents the frequency of the microwave oscillator (12), wherein said signals (F, IF') can be connected selectively to said output of the driver device.

2. Driver device according to Claim 1, **characterized in that** the microwave oscillator (12) is a voltage-controlled oscillator, and **in that** a third check signal (P2) of the monitoring device indicates the driver voltage (U), generated by the controller (14), for the microwave oscillator.

3. Driver device according to one of the preceding claims, **characterized in that** it has a modulator (16) for frequency modulation of the output signal (RF) of the microwave oscillator (12).

4. Driver device according to Claim 3, **characterized by** a parameter memory (34) for storing modulation parameters for the modulator (16) and by an interface (20) at a further output of the driver device via which the content of the parameter memory (34) can be read out.

5. Driver device according to one of the preceding claims, **characterized in that** it has a status register (36) which indicates the respective operating state of the driver device (10), and **in that** the content of the status register (36) can be read out via an interface (20) at a further output of the driver device.

6. Driver device according to one of the preceding claims, **characterized by** a control device (18) which can be operated by means of a bidirectional interface (20), and which evaluates and/or stores at least a further one of the check signals (P1, P2, P3), wherein the bidirectional interface (20) is connected to a further output of the driver device.

7. Driver device according to Claim 1, **characterized in that** it has an integrated frequency divider (44) for reducing the frequency of the signal which is output via said output of the driver device.

8. Driver device according to one of the preceding claims, **characterized in that** it is embodied as an integrated semiconductor component.

## Revendications

1. Dispositif de commande d'un oscillateur à micro-ondes (12) dans un système radar pour véhicules automobiles, lequel dispositif présente :
un régulateur (14) qui régule la fréquence de l'oscillateur à micro-ondes et un dispositif intégré de surveillance (38, 40, 42, 44) qui délivre au moins un signal de test (P1, P2, P3, P4) pour vérifier le bon fonctionnement d'au moins une partie du système du dispositif de commande,
**caractérisé en ce que**
le dispositif de surveillance forme au moins un signal de test (P1, P2, P3, P4) pour vérifier le bon fonctionnement du régulateur (14),
**en ce que** le régulateur (14) présente un détecteur de phase (28) qui compare la phase d'un signal de guidage (F) à la phase d'un signal de rétroaction (IF') qui représente la fréquence de l'oscillateur à micro-ondes,
**en ce qu'**un premier signal de test (P1) du dispositif de surveillance indique le déphasage entre le signal de guidage (F) et le signal de rétroaction (IF') et est délivré par au moins une sortie du dispositif de commande qui émet un deuxième signal de test (P4) et par laquelle au moins un des signaux (F, IF') produits en fonctionnement dans le dispositif de commande (10) est délivré comme deuxième signal de test (P4) et
**en ce qu'**un commutateur (42) par lequel plusieurs signaux (F, IF') peuvent être commutés sur ladite sortie du dispositif de commande est prévu,
le deuxième signal de test (P4) délivré par ladite sortie du dispositif de commande étant un signal de guidage (F) à fréquence modulée ou un signal de rétroaction (IF') qui représente la fréquence de l'oscillateur à micro-ondes (12), ces signaux pouvant être commutés sélectivement sur ladite sortie du dispositif de commande.

2. Dispositif de commande selon la revendication 1, **caractérisé en ce que** l'oscillateur à micro-ondes (12) est un oscillateur asservi en tension et **en ce qu'**un troisième signal de test (P2) du dispositif de surveillance indique la tension de commande (U) formée par le régulateur (14) pour l'oscillateur à micro-ondes.

3. Dispositif de commande selon l'une des revendications précédentes, **caractérisé en ce qu'**il présente un modulateur (16) qui module la fréquence du signal de sortie (RF) de l'oscillateur à micro-ondes (12).

4. Dispositif de commande selon la revendication 3, **caractérisé par** une mémoire (34) à paramètres qui conserve les paramètres de modulation du modulateur (16) et par une interface (20) située sur une autre sortie du dispositif de commande et par laquelle le contenu de la mémoire (34) à paramètres peut être lu.

5. Dispositif de commande selon l'une des revendications précédentes, **caractérisé en ce qu'**il présente un registre d'état (36) qui indique à tout instant l'état de fonctionnement du dispositif de commande (10) et **en ce que** le contenu du registre d'état (36) peut être lu par une interface (20) prévue sur une autre sortie du dispositif de commande.

6. Dispositif de commande selon l'une des revendications précédentes, **caractérisé par** un contrôleur (18) qui peut réagir par l'intermédiaire d'une interface bidirectionnelle (20) et qui évalue et/ou conserve en mémoire au moins un autre des signaux de test (P1, P2, P3), l'interface bidirectionnelle (20) étant reliée à une autre sortie du dispositif de commande.

7. Dispositif de commande selon la revendication 1, **caractérisé en ce qu'**il présente un diviseur de fréquence intégré (44) qui abaisse la fréquence du signal délivré par ladite sortie du dispositif de commande.

8. Dispositif de commande selon l'une des revendications précédentes, **caractérisé en ce qu'**il est configuré comme composant semi-conducteur intégré.
